(19)

Europäisches Patentamt
European Patent Office
Office européen des brevets

(11) **EP 1 491 995 B1**

(12) **EUROPEAN PATENT SPECIFICATION**

(45) Date of publication and mention of the grant of the patent:
**19.08.2009 Bulletin 2009/34**

(51) Int Cl.:
**G06F 5/10** (2006.01)     **H04L 12/56** (2006.01)

(21) Application number: **04102921.6**

(22) Date of filing: **23.06.2004**

(54) **Dual-port functionality for a single-port cell memory device**

Dual-Port-Funktionalität für einen Single-Port-Speicher

Functionalité double port pour une mémoire à simple port

(84) Designated Contracting States:
**DE FR GB**

(30) Priority: **23.06.2003 US 601816**

(43) Date of publication of application:
**29.12.2004 Bulletin 2004/53**

(73) Proprietor: **Texas Instruments Incorporated**
**Dallas, TX 75265 (US)**

(72) Inventor: **Liu, Heyun H.**
**Plano,**
**Texas 75025 (US)**

(74) Representative: **Holt, Michael et al**
**Texas Instruments Limited**
**European Patents Department**
**800 Pavilion Drive**
**Northampton NN4 7YL (GB)**

(56) References cited:
**EP-A- 0 321 089         EP-A- 1 091 288**
**DE-A1- 10 121 196       US-A- 5 546 347**
**US-A1- 2003 053 367**

Printed by Jouve, 75001 PARIS (FR)

**Description**

BACKGROUND OF THE INVENTION

This invention is in the field of integrated circuit memory architecture, and is more specifically directed to the architecture of memories as used in first-in-first-out (FIFO) buffers.

The widespread deployment and use of computer networks over recent years has relied, in large part, on Ethernet technology. As is well known in this field, Ethernet networking involves the use of packet-based communications, by way of which each communication is transmitted in multiple packets, each packet including identification information such as the destination and source addresses for the message, and the position of the packet within the sequence that makes up the overall communication. This approach enables the efficient deployment of high-capacity networks, which may be quite complex in structure, in a manner that permits high fidelity in the successful and efficient transmitting of digital data of varying types and sizes. Indeed, Ethernet technology has played a large part in the development and deployment of the Internet.

Packet-based communications have played a large role in the realization of digital multimedia communications, and in communications at varying Quality of Service (QoS) levels. The different QoS levels specify different data performance, and can support different priority communications and, ultimately, can support different rates or tariffs that can be charged to the users. Examples of QoS levels or classes include constant bit rate (CBR), unspecified bit rate (UBR, also referred to as best-effort), and variable bit rate (VBR). These well-known categories ensure the fair allocation of the available bandwidth over a communications channel.

Typically, lossless flow control in the Ethernet context involves some amount of buffering of the transmitted data at each node in the network. This buffering is often necessary because of the variable nature of the architecture of a given network, and because of the possibility that a bottleneck may exist somewhere in the network downstream from a given network node. In order to be lossless, sufficient buffer capacity must be provided to store one or more packets, at the receive and transmit sides of a node, in the event of a downstream bottleneck; the buffered packets can then be forwarded later, when network conditions permit. This buffering is often accomplished by way of a dual-port memory, acting as a dual-port first-in first-out (FIFO) buffer. The dual-port buffer permits simultaneous, and asynchronous, reads and writes to the buffer, which is particularly beneficial considering the asynchronous nature of the communications on both side of a given network node. Given a FIFO buffer of sufficient capacity, loss-less flow control can be readily carried out.

However, modern Ethernet technology is now capable of carrying extremely high data rates, such as the 10 Gigabit Ethernet backbone networks now becoming popular. At these data rates, however, relatively large FIFO buffers are required to attain lossless flow control. The buffer size required for lossless flow control also increases with increasing distances between network nodes. This relationship between buffer size and data rate and node distance results from the handshaking manner in which flow control operations are carried out between the transmitting and receiving nodes over a network link. For example, the receiving FIFO buffer at a network node will rapidly fill up if a bottleneck occurs downstream from the receiving node. Once this FIFO buffer fills past a threshold value, the transmit side of the receiving node issues a pause request to the transmitting network node, requesting a pause in the transmission of data packets. Upon receipt of the pause request, the transmitting node finishes transmitting the current packet, the remainder of which must be buffered at the receiving node for the communication to remain lossless. Accordingly, the FIFO buffer at the receive node must have sufficient capaci ty to store a volume of data that is transmitted during the delay required for the receiving node to initiate the pause request, during the delay of the transmitting node in receiving and processing the pause request, and also during the remainder of the current packet. A high data rate thus necessitates a rather large buffer for lossless operation. Long distance s between network nodes also contribute to the required FIFO capacity because the FIFO must also buffer the bits that are in transit over the facility.

It has been discovered, in connection with this invention, that conventional dual-port memory FIFOs are too small for reasonable cable lengths in Gigabit Ethernet Metro Area Network (MAN) implementations. This is because dual-port memory is extremely expensive from the standpoint of integrated circuit chip area ("silicon area"). For example, under current application specific integrated circuit (ASIC) technologies, dual-port RAMs or two-port register files are realistically limited to about 250 kbits in size. Unfortunately, a 250 kbit FIFO is virtually useless for loss-less Gigabit Ethernet, as a buffer of this size can support no more than about 2 km of cable length for even the most forgiving 10GE class (10GBASE-X, supporting only normal packets).

On the contrary, realistic Metro Area Networks (MAN s) should have cable lengths of on the order of 40 km, and should be capable of Gigabit Ethernet communications supporting jumbo packets according to 10GBASE-W. According to the analysis described above, this functionality will require FIFO capacities of on the order of several megabits, which of course are prohibitively expensive to realize via dual-port RAM, especially considering the recent trend to integrate the media access control (MAC) circuitry for Ethernet and other packet-based networking into a single integrated circuit. For these reasons, a disconnect exists between the available technology for FIFO memory and the functional need of Gigabit Ethernet in the MAN environment.

By way of further background, many other applications of dual-port memories also exist in the art. Typically, dual-port memories are useful at any large data rate, or data quantity, interface between asynchronous system elements. Examples of such interfaces include data transfer interfaces between computer subsystems or input/output devices and a main computer bus, non-packet-based networking applications, interfaces between dissimilar microprocessors or CPUS in a multiprocessing environment, emulation systems, and the like.

United States Patent No. 5, 546, 347 describes an interleaving architecture and method for a high density FIFO where a plurality of parallel single port memory arrays are coupled between a corresponding plurality of input FIFO sets and a corresponding plurality of output FIFO sets to create a high-speed FIFO memory device. The input FIFO sets, which provide data values to their corresponding single port memory arrays, are responsive to a write clock signal. The output FIFO sets, which receive data values from their corresponding single port memory arrays, are responsive to a read clock signal. The order of read and write operations within each single port memory array is controlled by a corresponding state machine which is coupled to either the write clock signal or the read clock signal. Each of the parallel single port memory arrays operates independently. The input FIFO sets de-interleave an input data stream into a plurality of intermediate data streams. Each intermediate data stream is routed through a single port memory array to an output FIFO set. The intermediate data streams are interleaved and transmitted to an output port. In one embodiment, the high-speed FIFO memory device has the capability to retransmit previously transmitted information.

Accordingly, a need for cost-efficient dual-port memories exists not only in high-speed packet-based network communications, but in many systems and system applications.

## BRIEF SUMMARY OF THE INVENTION

It is therefore an object of this invention to provide a low-cost memory architecture having dual-port capability.

It is a further object of this invention to provide such a memory architecture having an array of single-port memory cells that is accessible in dual-port fashion.

It is a further object of this invention to provide such a memory architecture that is suitable for efficient implementation as embedded memory within a large scale logic device.

It is a further object of this invention to provide a media access controller for high-speed packet-based network communications, incorporating such a memory architecture for receive and transmit FIFO buffering.

It is a further object of this invention to provide such a controller that implements lossless flow control in the Gigabit Ethernet context, for cable lengths on the order of tens of kilometers and greater, for example in the Metro Area Network (MAN) context.

The present invention provides a first-in-first-out memory, a method of buffering data words with a memory circuit, a method of managing the communications of data words arranged in packets and a network node for controlling the transmission and receipt of packet-based data over a communications facility as set out in the appended claims.

Other objects and advantages of this invention will be apparent to those of ordinary skill in the art having reference to the following specification together with its drawings.

The present invention may be implemented into a memory architecture including a double width array of conventional single-port memory cells. The memory array is of a double-word-width relative to the external data width. A write buffer buffers two data words, with writes to the memory array being of double-word width. On the read side, external read requests are buffered so that reads from the memory array are of double width, effected upon two or more requests being received. Sequential logic controls the memory so that asynchronous external reads and writes are internally performed as scheduled reads from and writes to the memory array.

## BRIEF DESCRIPTION OF THE SEVERAL VIEWS OF THE DRAWING

Figure 1a is a functional data flow diagram, in block form, of a high-speed data network, including media access control (MAC) functions in two network nodes, into which the preferred embodiment of the invention is implemented.

Figure 1b is an electrical diagram, in abstract block form, of the network of Figure 1a, illustrating the various delay times involved in ensuring lossless flow control according to the preferred embodiment of the invention.

Figure 2 is an electrical diagram, in block form, of a network node of Figure 1a, including an exemplary transceiver device into which the preferred embodiment of the invention is implemented.

Figure 3 is a functional diagram, in block form, illustrating the external communications between a first-in-first-out (FIFO) memory according to the preferred embodiment of the invention.

Figures 4a and 4b are timing diagrams illustrating an example of asynchronous reads and writes from and to a FIFO memory according to the preferred embodiment of the invention.

Figure 5 is an electrical diagram, in block form, of the construction of a FIFO memory according to the preferred embodiment of the invention.

Figure 6 is a data flow diagram illustrating the write and read buffering of data into and out of a single-port memory utilized in the FIFO memory according to the preferred embodiment of the invention.

Figure 7 is a state diagram illustrating the operation of writes of data to the memory array used in the FIFO memory according to the preferred embodiment of the invention.

Figure 8 is a state diagram illustrating the operation of reads of data from the FIFO memory according to the preferred embodiment of the invention.

Figure 9 is an electrical diagram, in block form, illustrating the read brake function of the FIFO memory according to the preferred embodiment of the invention.

Figure 10 is a diagram of the output FIFO buffer capacity illustrating its thresholds for initiating or halting operations.

DETAILED DESCRIPTION OF THE INVENTION

The present invention will be described in connection with its preferred embodiment, namely as implemented into transmit and receive buffers of high data rate Ethernet network nodes. This exemplary description is selected because of the particular benefits that this invention provides in that environment. However, it will be understood by those skilled in the art having reference to this specification that this invention may be used in connection with first-in-first-out (FIFO) buffers in general, and as implemented in a wide range of applications. Accordingly, it is to be understood that the following description is provided by way of example only, and is not intended to limit the true scope of this invention as claimed.

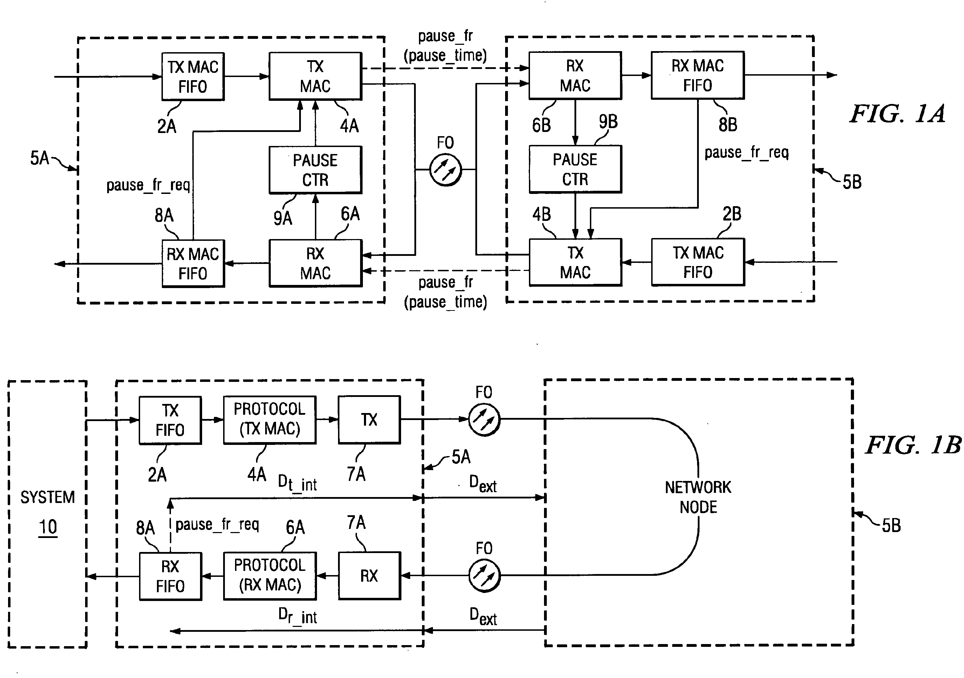

An example of a high data rate communication system into which the preferred embodiment of the invention is implemented is shown in Figure 1a, in the form of a functional data flow diagram. In this example, two network nodes 5A, 5B are communicating with one another over a medium, which in this example is fiber optic facility FO. Either or both of network nodes 5 may be a Metro Area Network (MAN) node, a Local Area Network (LAN) switch, or the like, and as such are generically referred to as network nodes 5 in the system functional diagram of Figure 1a. Each of network nodes 5A, 5B include both a transmit side and a receive side, each of which includes FIFO buffering and media access control (MAC) functionality. With reference to network node 5A, for example, transmit MAC FIFO 2A buffers data to be transmitted over facility FO via transmit MAC function 4A; on the receive side, receive MAC function 6A receives data from facility FO and forwards the received data to receive MAC FIFO 8A. Network node 5B is similarly constructed.

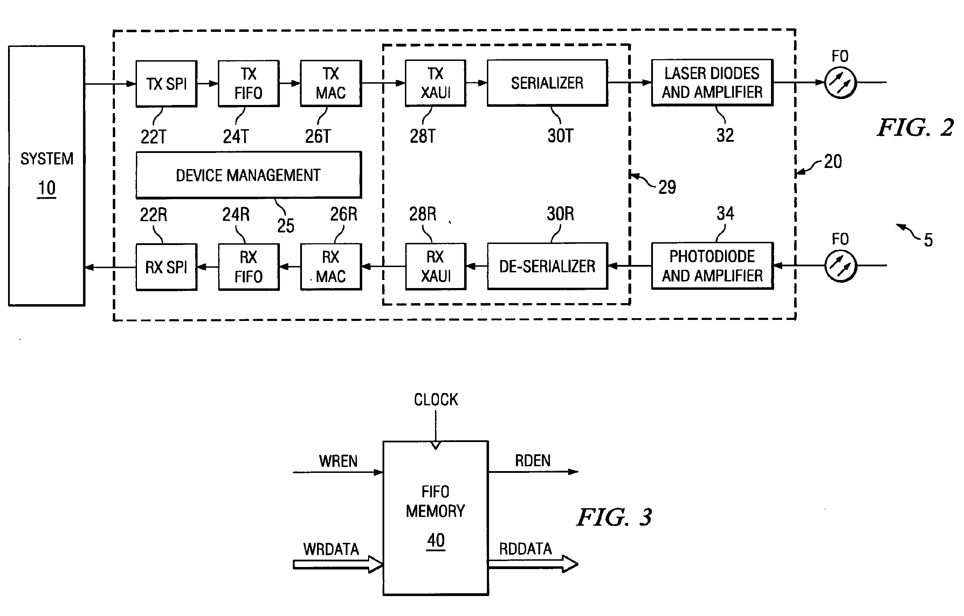

The specific hardware into which network nodes 5A, 5B of Figure 1a may be implemented can vary according to the available technology and according to specific system attributes, such as type of communications facility (e.g., fiber optic, coaxial cable, twisted pair, wireless). As such, network nodes 5 may be implemented in the form of a line card of another conventional network element or network line. Figure 2 illustrates, in block form, a typical hardware realization of network node 5 according to the exemplary implementation of a Gigabit Ethernet line card for an optical network implementation. Of course, network nodes 5A, 5B may be constructed in ways other than that illustrated in Figure 2, and indeed need not be constructed similarly as one another, so long as the appropriate communications protocols are obeyed by each.

As shown in Figure 2, network node 5 includes system 10, which generically refers to the function of node 5 in the overall communications network of Figure 1a. For example, if network node 5 corresponds to a switch or router, then system 10 will correspond to those switching and routing functions; alternatively, if network node 5 is a server, then system 10 will be realized by a server architecture. System 10 may also be realized by a switching fabric, or simply a bus connected to other line cards, in some architectures.

Line card 20 performs various functions involved in transmitting data from downstream functions 10 over fiber optic facility FO, and in receiving signals from fiber optic facility FO for downstream functions 10. The functions performed by line card 20 include those functions involved in the layer 2 protocol processing (e.g., media access control, or MAC) and physical (PHY) protocol layers. As such, line card 20 is connected on its system side to downstream functions 10, and on its line side to fiber optic facility FO via laser diodes and amplifiers 32 (for transmit) and photodiode and amplifiers 34 (for receive).

According to the preferred embodiment of the invention, line card 20 is realized in a single integrated circuit device, for reduced cost and improved performance. This implementation of line card 20 may be referred to as an application specific signal processor (ASSP), and may be realized by way of one or more digital signal processors (DSPs). Alternatively, line card 20 may be implemented in several devices as a chipset, or integrated with additional functions such as some or all of downstream functions 10.

In the example of Figure 2, line card 20 may be functionally considered as having transmit and receive "sides". Typically, some of the functionality of each of the transmit and receive sides of line card 20 may be performed by the same physical hardware, such as a DSP core or custom logic. For clarity in this description, however, the construction of line card 20 according to the preferred embodiment of the invention will refer to the construction of line card 20 according to its transmit and receive sides. Management logic 25 is preferably provided within line card 20, to control the operation and coordination of the transmit and receive functions.

Beginning with the transmit side of line card 20, transmit system interface 22T interfaces with downstream functions 10, preferably according to a modern interface protocol such as the System Packet Interface (SPI) standard. Interface 22 receives data from downstream functions 10, and forwards this data to transmit FIFO 24T for eventual transmission over fiber optic facility FO,. Transmit FIFO 24T, which equates to transmit MAC FIFO 2A or 2B in the functional diagram of Figure 1a, buffers the data received from downstream functions 10 until the data can be forwarded to transmit MAC processor 26T in line card 20. The construction of transmit FIFO 24T according to the preferred embodiments of the invention will be described in further detail below, for the example of a Gigabit Ethernet implementation, in which case the layer 2 protocol processing layer equates to the media access control (MAC) layer. Of course, it is to be understood that this invention is not specific to a particular protocol, and that this description of the preferred embodiment of the invention with reference to Gigabit Ethernet communications is therefore provided by way of example only.

Transmit MAC processor 26T processes the buffered received data into the appropriate form for transmission over facility FO, according to the particular protocols in place. Typically, it is contemplated that such operations as flipping of bytes from LSB-first to MSB-first, stripping of Ethernet headers, byte counting, insertion of control bytes, character or symbol alignment, and formatting into packets, are performed by transmit MAC processor 26T. The formatted and processed data, in the appropriate format such as XGMII (10 Gbit Media Independent Interface), are then forwarded to transmit XAUI 28T.

Transmit XAUI (10 Gbit Attachment Unit Interface) 28T converts the data into the appropriate format, an example of which is a forty-bit four-channel datapath. This XAUI-formatted data are then forwarded to transmit serializer 30T, which converts the parallel channel data into serial streams that are compliant with the transmission standard. For example, where the output of transmit XAUI 28T is provided as four channels of ten-bits in parallel, transmit serializer 30T serializes these four channels into four single-bit serial channels, each operating at high speeds such as on the order of 3.125 Gbps for 10 Gbit communications. The serial data output by transmit serializer 30T are then applied to laser diode and amplifier block 32, which generates the appropriate optical signals applied to fiber optic facility FO.

The process is reversed on the receive side of line card 20. Incoming optical signals are converted by photodiode and amplifiers 34 into an electrical signal that is forwarded to deserializer 30R in line card 20. The output parallel channels from deserializer 30R to receive XAUI 28R, which reformats the signals into the desired format, for example XGMII, and applies the received signals to receive MAC processor 26R. MAC processor 26R performs such functions as MSB-first to LSB-first translation, adding Ethernet headers, byte counting, removal of control bytes, character or symbol alignment, and formatting into the desired packet structure. In this regard, transmit and receive XAUI 28T, 28R, serializer 30T, and deserializer 30R may be embodied within a single integrated circuit device, referred to in the art as a transceiver; of course, the particular boundaries of integrated circuits used in line card 20 may vary widely, depending upon the manufacturing technology and the available functionality.

Receive FIFO 24R equates to receive MAC FIFO 8A or 8B in the functional diagram of Figure 1a. In the embodiment of Figure 2, receive FIFO 24R buffers the formatted and processed data received over fiber optic facility FO, until the data is forwarded to downstream functions 10. The construction of transmit FIFO 24R according to the preferred embodiments of the invention will also be described in further detail below. Receive FIFO 24R outputs the buffered data to receive system interface 22R, which interfaces with downstream functions 10, preferably according to a modern interface protocol such as the System Packet Interface (SPI) standard.

Referring back to the functional diagram of Figure 1a, loss-less flow control is initiated by receive MAC FIFOs 8A, 8B; as mentioned above, receive MAC FIFOs 8A, 8B may be implemented as receive FIFO 24R within line card 20, as shown in Figure 2 and described above. In an example of loss-less flow control at network node 5A, once receive MAC FIFO 8A fills beyond a threshold level (the "full" threshold) as traffic from network node 5B is received at a higher rate than the data can be forwarded downstream, receive MAC FIFO 8A issues a request for a pause frame (pause_fr_req) to its transmit MAC function 4A. Transmit MAC function 4A then issues a request (pause_fr) for a pause frame of a specified duration (pause_time) to network node 5B. In practice, the pause frames are ON and OFF messages, where the ON message is a frame with maximum pause quanta and the OFF message is a frame with zero pause quanta. Receive MAC function 6B will receive this request, and cause its corresponding transmit MAC function 4B to pause the sending of data for a specified duration, measured by pause counter 9B in the conventional manner, following the completion of the packet that is currently being transmitted.

In order to ensure lossless communications, regardless of the particular MAC protocol being used, receive MAC FIFO 8A (e.g., receive FIFO 24 in line card 20) must have sufficient capacity, beyond the capacity threshold at which it issues a pause frame request, to store packet data that continues to be transmitted after its pause frame request but until the pause actually begins. The size of receive MAC FIFO 8A, and also the threshold at which it issues a pause frame request, must contemplate this absorption of traffic. One can estimate this capacity by estimating the delay times, preferably as a number of clock cycles, involved from the time that the pause frame request is issued until the pause is actually effected by the transmitting node, and then multiplying the sum of these delay times by the data transmission rate to arrive at the necessary capacity. This capacity determination can be more easily considered with reference to Figure 1b, which is a somewhat abstracted, protocol independent, representation of network node 5A, illustrating the transmit and receive circuitry as a generic transceiver 7A. As shown in Figure 1b, delay time $D_{t\_int}$ is the delay time, internal to network node 5A, between the clock cycle in which receive FIFO 8A reaches its "full" threshold and the clock cycle in which the pause frame request propagates to the edge of the external PHY media (facility FO). Delay time $D_{ext}$ is the delay of the pause request as it is transmitted over the fiber optic facility FO to network node 5B, and also the delay of the leading edge of the stopped traffic propagating to the edge of fiber optic facility FO leading from network node 5B to network node 5A. On the receive side of network node 5A, internal delay time $D_{r\_int}$ is the internal delay time between transceiver 7A receiving the pause request, protocol function 6A handling the pause request, and receipt traffic actually stopping at receive FIFO 8A. In addition, one must consider the time required for the completion of a current packet, namely delay time $D_{pkt}$. Considering that the "full" threshold for receive FIFO 8A is typically set at one-half its total capacity C, and assuming that network node 5B is similarly constructed as network node 5A and involves equal internal delay times, this capacity C can be defined from:

$$\frac{C}{2} = 2(D_{t\_\text{int}} + D_{ext} + D_{r\_\text{int}}) + D_{pkt} \qquad (1)$$

where the delay times D are measured in terms of "bit times" (i.e., number of clock cycles multiplied by the bits transmitted per cycle).

Typically, as known in the art, receive FIFO 8A will initially store an amount of data that fluctuates in a range well below its "full" threshold. Once this "full" threshold is reached, however, then the amount of data stored within receive FIFO 8A will tend to fluctuate around the "full" threshold, maintained by its issuing of pause frame requests to the transmitting node.

The actual physical size of the FIFO buffers can be calculated for specific communications protocols and systems. For example, in modem 10 Gigabit Ethernet wide area networks (WANs) that implement so-called "Metro Networks", typical packet lengths can be as long as 1526 byte payloads, with 118 overhead bytes. If so-called "jumbo" packets are permitted, the packet lengths can be as long as 10000 bytes, with 780 overhead bytes. The worst case delay time $D_{pkt}$ for jumbo WAN packets is therefore about 86,240 bit times (10780 * 8). The internal delay component $D_{int}$ can vary from 14848 to 30720 bit times, depending upon the particular type of 10GE coding (i.e., 10GBASE-R, -W, or -X). The external delay component $D_{ext}$ of course depends upon the length of the cable between network nodes 5A, 5B, and the relative velocity of light within the facility:

$$D_{ext} = \frac{100M}{3n} \quad \text{(in bit times)} \qquad (2)$$

where $M$ is the cable length in meters, and $n$ is the relative speed of light in the cable (relative to $c$, the speed of light in free space), which varies from 0.4. to 0.9.

One can evaluate the necessary memory capacity $C$ for the receive MAC FIFOs 8A, 8B from a combination of equations (1) and (2). In addition, transmit MAC FIFOs 2A, 2B must have the same capacity, considering that the upstream data sources will continue to forward data to be transmitted during the time of the loss-less flow control pauses in traffic. It is more useful to consider the maximum distance $M$ that can be supported by a given FIFO capacity C. It has been discovered, from such an evaluation, that a capacity C of 250 kbits or less is virtually useless for loss-less flow control functionality, as this capacity provides at most on the order of 2 km of cable length for even the most forgiving 10GE class (10GBASE-X, for $n$=0.9, supporting normal packets only). A more desirable installation for a conventional Metro Area Network is a cable length *M* of on the order of 40 km, supporting jumbo packets according to 10GBASE-W; for this functionality, which requires a FIFO capacity *C* of on the order of several megabits.

As mentioned above, FIFO buffers are typically implemented by memories of conventional dual port architecture. The dual port architecture enables efficient FIFO operation, as the two ports to each memory cell can operate in effectively an asynchronous manner, matching the asynchronous buffer function of the FIFO itself. However, also as mentioned above, dual port memories of megabit capacity are prohibitively expensive, especially when considering the integration of such memories as on-chip functions within a VLSI integrated circuit. In contrast, conventional single port memories of this size can be realized within reasonable chip area, and are suitable for implementation into complex logic circuitry, such as that logic involved in a Gigabit Ethernet transceiver function such as line card 20 of Figure 2.

According to the preferred embodiment of the invention, therefore, transmit and receive FIFOs 24T, 24R of line card 20 are constructed as memories having a single port memory array, for example of a capacity on the order of up to several megabits, but which appears to be a dual-port buffer to the external circuits and functions that write to and read from FIFOs 24T, 24R. FIFOs 24T, 24R are thus capable of serving as transmit and receive MAC FIFOs 2, 8 in the network arrangement of Figure 1a, enabling the implementation of high speed communications over relatively long distances, for example in Gigabit Ethernet communications in a MAN context, with distances between nodes of on the order of kilometers.

Referring now to Figure 3, the construction of a FIFO memory according to the preferred embodiment of the invention will now be described in detail. As apparent from the foregoing description, this FIFO memory according to this preferred embodiment of the invention may be implemented into the network node of Figure 2 as either one of transmit and receive FIFOs 24T, 24R, for performing the MAC FIFO buffer functions 2A, 2B, 8A, 8B in the system that is functionally illustrated in Figure 1a. It is further contemplated that the construction of the FIFO memory according to the preferred embodiment of this invention will also be beneficial in other applications of FIFO buffering, beyond those involved in high-speed network communications. Examples of such other uses include data transfer interfaces between computer subsystems or input/output devices and a main computer bus, non-packet-based networking applications, interfaces between dissimilar microprocessors or CPUS in a multiprocessing environment, emulation systems, and the like.

However, for the example of the network node of Figure 2 and the network implementation of Figure 1a, interface constraints for the construction of the FIFO memory according to the preferred embodiment of the invention may be in place. In this example, the FIFO memory must be capable of handling asynchronous read and write enable signals, and asynchronous write data application, using a common clock. Figure 3 illustrates a simplified example of the interfaces to FIFO memory 40, according to the preferred embodiment of the invention. In this example, clock CLK is applied to FIFO memory 40, to serve as a system clock for FIFO memory 40 and its operation. On the write side, FIFO memory 40 receives write enable signal WREN, which indicates that a source of data to FIFO memory 40 is requesting a write operation of data presented on input data lines WRDATA. It is contemplated that the data width of input data lines WRDATA will be at least one byte (eight bits), and preferably one data word in width (sixteen or thirty-two bits). On the read side, FIFO memory 40 receives read enable signal RDEN, indicating that a destination of data from FIFO memory 40 is requesting a read of data, which FIFO memory 40 will present on output data lines RDDATA, which will typically be of the same data width as input data lines WRDATA.

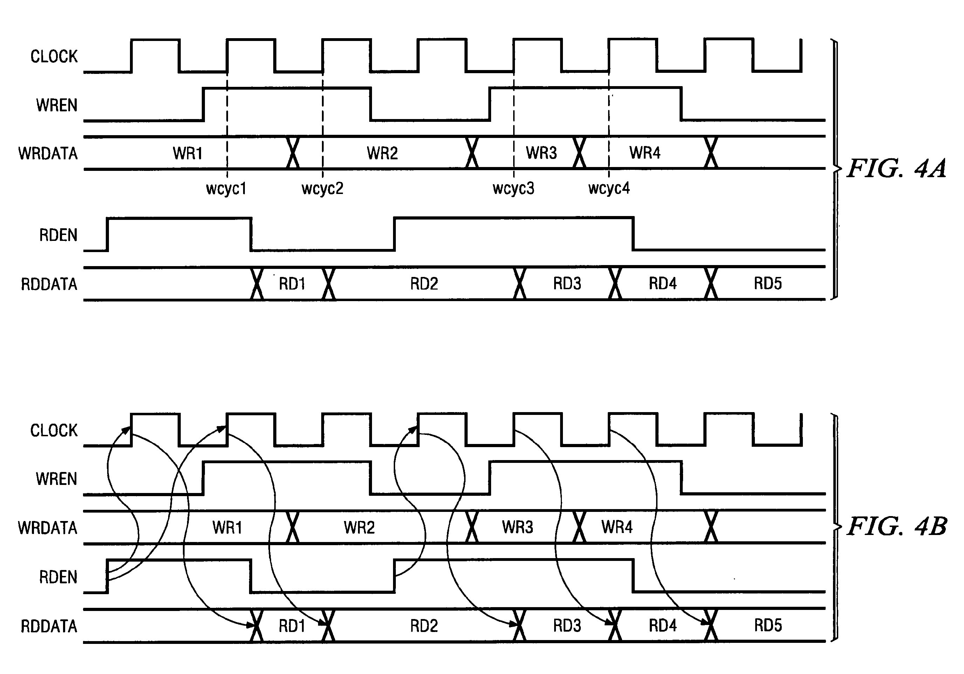

Referring now to Figures 4a and 4b, the external operation of the write and read interfaces to FIFO memory 40 according to this embodiment of the invention will be described. Figure 4a illustrates the operation of the write interface to FIFO memory 40 during a sequence of asynchronous write and read operations, while Figure 4b illustrates the operation of the read interface to FIFO memory 40 over the same cycles as shown in Figure 4a.

In Figure 4a, write enable line WREN is taken to a high active level during such time as input data lines WRDATA are carrying data value WR1. Upon the next rising edge of clock CLK, in write cycle wcyc1, data value WR1 is written into FIFO memory 40. Input data lines WRDATA next receive data value WR2, while write enable line WREN remains high. This data value WR2 is written into FIFO memory 40 upon the next rising edge of clock CLK, in write cycle wcyc2. In this example, write enable line WREN is taken inactive low for a cycle or so, and is again activated while input data lines WRDATA are carrying data value WR3. This data value WR3 is written into FIFO memory 40 upon the next rising edge of clock CLK, in write cycle wcyc3. Input data lines WRDATA receive the next data value WR4, which are written into FIFO memory 40 upon the next rising edge of clock CLK, because write enable line WREN remains high during that cycle.

As shown in Figure 4a, read operations from FIFO memory 40 are being carried out during the write operations. These reads are asynchronous with the write operations, as evident from the non-aligned nature of write and read enable signals WREN, RDEN, and also from the non-aligned activity on input and output data lines WRDATA, RDDATA. Figure 4b illustrates the operation of the read operations that are carried out in these cycles, from FIFO memory 40 according to the preferred embodiment of the invention.

Prior to the first rising edge of clock CLK in Figure 4b, read enable line RDEN is taken active high. The rising edge of clock CLK then initiates a read from FIFO memory 40, with the data appearing on output data lines RDDATA after an access time (e.g., one cycle of clock CLK). In this first example, this data value from first rising edge of clock CLK is shown as data value RD1. In this example, read enable line RDEN remains high for the next rising edge of clock CLK, in response to which FIFO memory 40 presents the next data value RD2 on output data lines RDDATA. In this example, read enable line RDEN goes inactive for a cycle or so, precluding any reads responsive to the next rising edge of clock CLK. Upon read enable line RDEN again being driven high to request a read, and remaining high for three cycles in this example, the three successive rising edges of clock CLK cause the output of a corresponding sequence of data values RD3, RD4, RD5 in successive cycles, as illustrated in Figure 4b.

As shown in the examples of Figures 4a and 4b, FIFO memory 40 according to this embodiment of the invention externally appears exactly like a dual port RAM, because reads and writes are requested and carried out effectively in an asynchronous manner relative to one another. The data written to and read from FIFO memory 40 will relate to one another in FIFO fashion, in that the first data values written into FIFO memory 40 will be the first values read therefrom. According to the preferred embodiment of the invention, while FIFO memory 40 appears to external functions as a dual port RAM, it is constructed from a single port RAM architecture, thus greatly saving the cost and silicon area required for its realization. Indeed, it is contemplated that the present invention permits the construction of sizable FIFO memories having dual port capabilities, at a cost that is not prohibitive. Dual-port FIFO functions may be constructed according to this invention that may in fact be integrated into the same integrated circuit as the logic functions used in network communications, as described above.

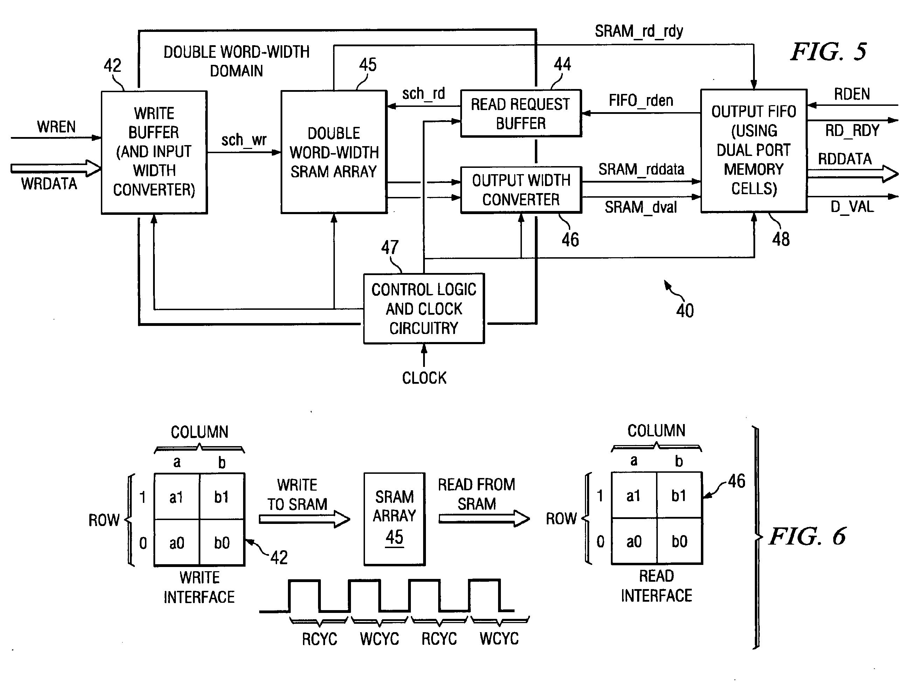

Referring now to Figure 5, the general construction and general operation of FIFO memory 40 according to the preferred embodiment of the invention will now be described. FIFO memory 40 is based on SRAM array 45, which is constructed as an array of single-port memory cells arranged in rows and columns, together with the appropriate addressing circuits, sense amplifiers, and input/output circuitry, as conventional for a typical SRAM array as known in the art. The memory cells in SRAM array 45 may be conventional 6-transistor, or 4-transistor, 2-resistor cells. According to this embodiment of the invention, however, the input and output data width into and out of SRAM array 45 is two words wide, relative to the word width of the read and write interfaces to FIFO memory 40. For example, if the external interface word width to FIFO memory is sixteen bits, the input and output data path widths to SRAM array 45 are thirty-two bits. As shown in Figure 5, FIFO memory 40 thus includes a "double word width domain", including SRAM array 45 and interface circuitry to it, as will now be described. As will become apparent from the following description, this double word width domain serves to resolve write and read conflicts to SRAM array 45, permitting FIFO memory 40 to externally appear as a dual port memory while using single port memory cells in SRAM array 45.

FIFO memory 40 also includes the appropriate power supply and clock control circuitry as conventional in the art. Figure 5 also illustrates control logic and clock circuitry 47, which includes the appropriate logic for controlling the operation of FIFO memory 40, including according to the operation described below. In addition, control logic and clock circuitry 47 also receives clock CLK, and includes circuitry for generating the appropriate internal clocks, including alternating internal read and write clock cycles according to this preferred embodiment of the invention, ultimately responsive to clock CLK. It will be understood by those skilled in the art that separate clock circuitry may alternatively be provided within FIFO memory 40 to receive and buffer system clock CLK, and generate and forward internal clocks based on system clock CLK to the constituent functions of FIFO memory 40, as desired. As will be evident from this specification, much of the control of FIFO memory 40 is preferably realized by way of sequential logic, according to the state diagrams described below, which may be implemented in a central location as suggested by control logic and clock circuitry 47 of Figure 5, or distributed throughout FIFO memory 40 as desired. It is contemplated that the particular implementation of these control functions for a particular application can be readily accomplished by those skilled in the art having reference to this specification.

The write interface to FIFO memory 40 is realized by write buffer 42, according to this preferred embodiment of the invention. As shown in Figure 5, write buffer 42 receives write enable signal WREN, and also receives input data WRDATA. Write buffer 42 buffers each incoming data word of input data WRDATA when enabled by write enable signal WREN, and upon the rising edge of clock CLK. In general, each single-word write request to FIFO memory 40 and its corresponding data, are buffered at write buffer 42. The actual write to the appropriate location of SRAM array 45 is effected after two words have been received and upon an internal write cycle becoming available. In general, cycles of clock CLK are evenly distributed, and preferably alternate, between internal read cycles from, and internal write cycles to, SRAM array 45. The receipt of single data words by write buffer, and the writing of double-words to SRAM array 45 by write buffer 42 effectively performs a data word width conversion function, according to this embodiment of the invention. This operation will be described in further detail below.

According to the preferred embodiment of the invention, as evident from the foregoing description, the converting of single-word-width internal input and output to and from double-word-width internal input and output enables the implementation of FIFO memory 40 using single port memory cells in SRAM array 45. The double word width domain of FIFO memory 40 resolves conflicts between asynchronous reads and writes to SRAM array 45 by assigning either a read cycle or a write cycle to each clock cycle, and by including a two-stage, two-word-wide buffer, at both of the read and write interfaces.

An example of this buffering is illustrated in Figure 6. In this example, write buffer 42 includes entries arranged as two rows (0, 1) and two columns (a, b), at the write and read interfaces, respectively. Each entry a0, a1, b0, b1 stores a single data word. According to this embodiment of the invention, write and read data (depending upon the buffer) is registered into the buffer in a fixed order, for example, a1, a0, b1, b0, a1, a0, b1, b0, and so on. By way of nomenclature, a column of the buffer will be considered as "matured" if both of its entries are occupied. Resolution of internal read and write conflicts is based upon the occupation of the entries in these buffers, the state of the enable signals on lines WREN, RDEN, and whether the current clock cycle is a read cycle or a write cycle. According to the preferred embodiment of the invention, alternating cycles of clock CLK are designated as read and write cycles between SRAM array 45 and write buffer 42 or output width converter 46, as the case may be (shown in Figure 6 as read cycle RCYC and write cycle WCYC).

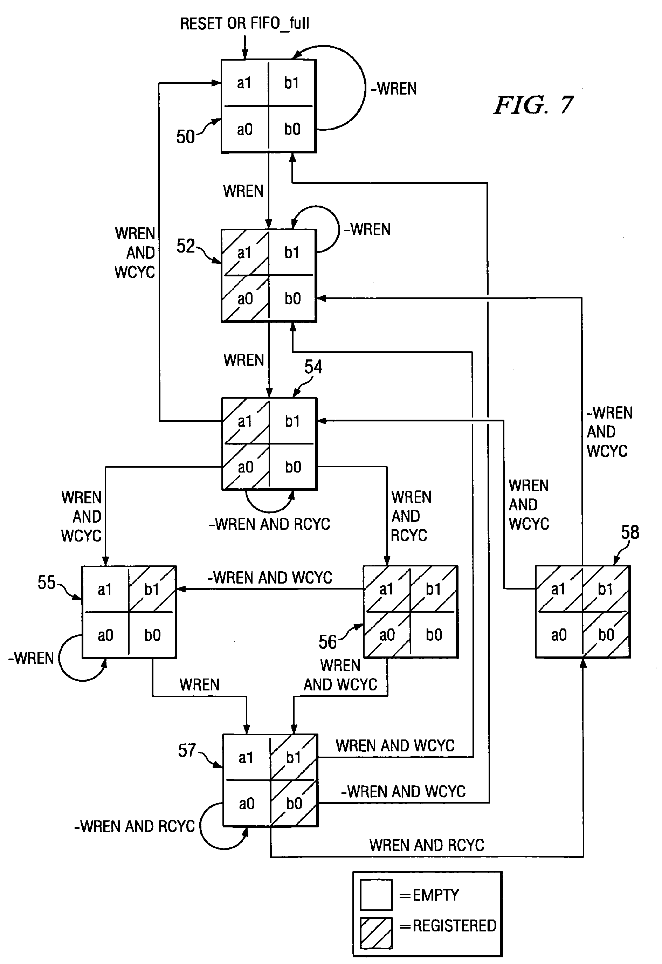

In summary, the operation of the buffering according to the preferred embodiment of the invention involves (i) registering input and output data into the buffer in the fixed order (a1, a0, b1, b0, ... ) in each cycle, and (ii) executing a read or a write operation in the corresponding read or write clock cycles, if a column is matured in the read and write buffers, respectively. The operation of write buffer 42 in this manner will now be described relative to the state diagram of Figure 7.

After reset, or initialization, of FIFO memory 40, or upon a fault condition such as FIFO memory 40 becoming completely full, write buffer 42 enters "all empty" state 50. As shown in Figure 7, in this state 50, none of the four data word entries of write buffer 42 contain registered data, and as such write buffer 42 is effectively empty. For those cycles of clock CLK (read or write) in which write enable line WREN is inactive (indicated in Figure 7 by ~WREN), write buffer 42 remains in empty state 50. Upon the write enable line becoming active (WREN), write buffer 42 will enter state 52 in the next cycle of clock CLK, in which an input data word is registered in its entry a1.

Because no full column is registered in write buffer 42 in its state 52, no writes to SRAM array 45 are performed from this state. Additional clock cycles in which write enable line WREN is inactive will cause write buffer 42 to remain in state 52. An active signal on write enable line WREN causes write buffer 42 to register a data word in entry a0, moving write buffer 42 to state 54, in which a full column (column a) contains registered data. Because this column has now matured, a double data word becomes writable from write buffer 42 to SRAM array 45 upon the next write cycle (WCYC). If the next write cycle WCYC occurs in combination with an active level on write enable line WREN, the double data word is written from write buffer 42 from column a and a data word is also received by write buffer into entry b1, moving write buffer 42 to state 55 as shown in Figure 7. In similar fashion as in state 52, write buffer 42 remains in state 55 for one or more successive cycles with inactive write enable -WREN. In the next cycle with an active level on write enable line WREN, write buffer registers a data word in entry b0 and moves into state 57. Referring back to state 54, if the next write cycle WCYC conversely occurs in combination with an inactive level on write enable line WREN, the double data word from column a is written to SRAM array 45 and no new data word is received, in which case write buffer 42 returns to empty state 50. In a read cycle RCYC, write buffer 42 registers another data word into entry b1 and transfers to state 56 if write enable line WREN is active, or remains in state 54 with no additional data word if write enable line WREN is inactive.

In state 56, column a of write buffer 42 has matured, and entry b1 is also registered with data. Because state 56 is entered only during a read cycle RCYC, the next cycle of clock CLK is necessarily a write cycle (WCYC) according to this embodiment of the invention. The state change from state 56 thus depends upon whether an active level is received on write enable line WREN. If write enable line WREN is inactive (~WREN) in this next write cycle (WCYC), no new data is received, but the double data word is written from matured column a to SRAM array 45; write buffer 42 enters state 55 as a result. On the other hand, if write enable line WREN is active, a data word is registered in entry b0, the double data word is written to SRAM array 45 from column a of write buffer 42, and write buffer 42 moves to state 57.

In state 57, column b has matured. Accordingly, the next write clock cycle (WCYC) will cause the writing of this column b to SRAM array 45. If the next write cycle (WCYC) occurs in combination with an active level at write enable line WREN, the double data word is written from column b to SRAM array 45 and a new data entry is registered in entry a1, placing write buffer 42 in state 52. If write enable line is inactive in this next write cycle, only the double data word is written from column b to SRAM array 45 and no new data word is received, placing write buffer 42 in empty state 50. Conversely, if the next cycle is a read cycle (RCYC), column b of write buffer 42 remains matured and is not written to SRAM array 45. If this read cycle occurs with an active write enable (WREN), a new data word is registered in entry a1, and write buffer 42 enters state 58; conversely, if an inactive write enable (-WREN) is received in this read cycle, there is no change to the contents of write buffer 42 and it remains in state 57.

Referring back to Figure 5, read interface of FIFO memory 40 involves read buffer 46 and output FIFO 48. This particular construction is especially beneficial to the use of FIFO memory 40 in a network application, as described above relative to Figures 1 and 2, to ensure integrity of the packet stream, by enforcing the constraint that the read of a packet will not begin until all or a sufficient amount of data from the packet is stored in FIFO memory 40. This function is effected in FIFO memory 40 by its asserting of an active signal on control line RD_RDY when the packet conditions (sufficient data, or complete packet) indicate that a read of the packet stream data in FIFO memory 40 may be made.

Also in the read context, it is often necessary for the destination of read data (e.g., transmit MAC 26T in the example of Figure 2) to stop the packet stream from time to time, for example to insert data words in its packet processing for network communications. This requires the read strobe (or read request) signal to FIFO memory 40 from the destination to be synchronized with the data that FIFO memory 40 presents. In conventional dual-port memories, this synchronizing of read strobes to output data is easily effected. However, according to this embodiment of the invention, the asynchronous reads and writes from external to FIFO memory 40 must be converted to scheduled reads and writes internally, in order to avoid read and write conflicts; scheduled reads therefore cannot necessarily be synchronized with the external, asynchronous, read strobes or requests. According to this embodiment of the invention, this synchronizing is effected by output FIFO buffer 48, preferably constructed of a small true dual-port memory, which effectively absorbs the response time difference of the data output from SRAM array 45.

Referring to the example of Figure 5, when SRAM array 45 is ready to provide data and issues a signal on line SRAM_rd_rdy to that effect, output FIFO 48 in turn asserts a signal on line RD_RDY to the external downstream destination of the data when data may be read from FIFO memory 40. For example, FIFO memory 40 is ready to be read when an end-of-packet (EOP) indication has been stored in SRAM array 45 for a packet, or when a sufficient amount of data for a given packet has been stored. Output FIFO 48 is then available to receive an externally generated read request, or read strobe, which is made by an active signal on line RDEN. These external requests are forwarded to read request buffer 44 via line FIFO_rden. Read request buffer 44 stores the incoming requests and, upon two such requests being made in combination with a read clock cycle becoming available internal to FIFO memory 40, effects a scheduled read of two data words from SRAM array 45, to occur upon the next internal read cycle becoming available.

The double-word width output from SRAM array 45 is applied to output data converter 46, which in turn applies single words of the read data to output FIFO 48 on data lines SRAM_rddata, along with an active signal on line SRAM_rdval to indicate the forwarding of valid data on lines SRAM_rddata. In this example, output FIFO 48 is preferably constructed as a small amount of dual-port RAM in combination with various control logic for effecting and controlling the read requests, and for synchronizing the output data to be applied on lines RDDATA at a relatively constant time relationship relative to the request on line RDEN. Output FIFO 48 thus effectively synchronizes the output data stream, despite the internal reads and writes within FIFO memory 40 being scheduled relative to one another. Output FIFO 48 forwards the requested data words on data lines RDDATA, and asserts an active level on line D_VAL to indicate the presence of valid data.

In the network communications context of Figures 1 and 2, the data stream being written into and read from FIFO memory 40 is packet-based, as mentioned above. As known in the art, the end of a packet is indicated by a data word encoded as an end-of-packet (EOP) indicator. It is of course possible (indeed, equally likely) that the EOP indicator will reside in an odd-numbered data word. Because write buffer 42 only writes matured columns into SRAM array 45, each EOP indicator should be followed by at least one idle data word, to keep the EOP indicator from remaining indefinitely in the first entry of a column of write buffer 42.

According to this embodiment of the invention, therefore, the combination of alternating read and write clock cycles (RCYC, WCYC), with write buffer having two double data word entries, enables asynchronous writes to FIFO memory 40 from external sources, while permitting scheduled writes to the single port SRAM array 45 within FIFO memory 40.

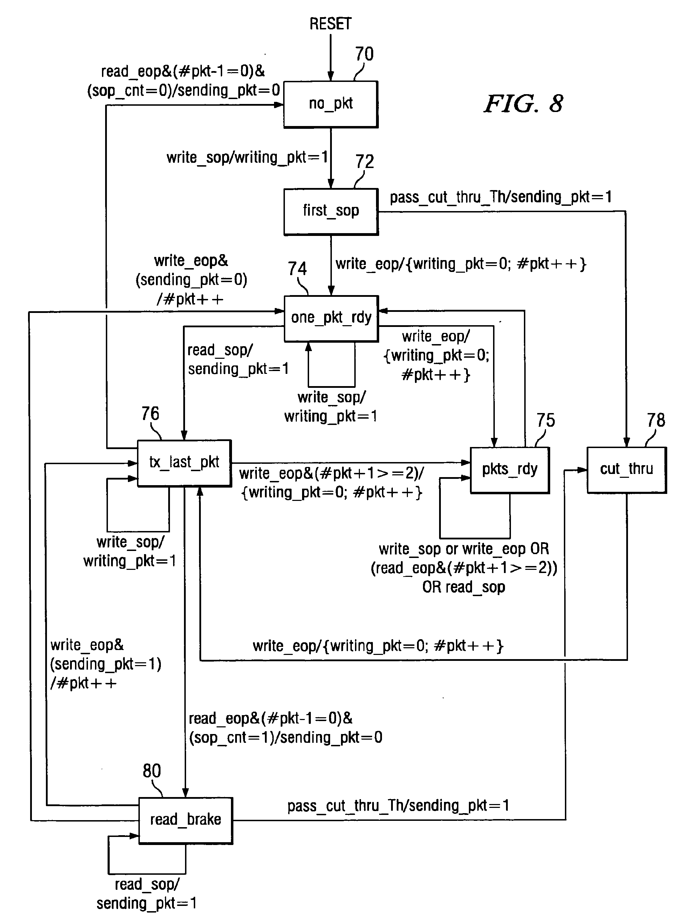

The foregoing construction of a FIFO memory according to the preferred embodiment of the invention is useful for all applications of FIFO buffers in electronic systems, by providing a memory that externally appears as a dual port memory, but which can be implemented by way of conventional single port RAM cells. In the network communications context, in which the data passing through FIFO memory 40 is, or is to be, arranged in packets, FIFO memory 40 preferably includes additional control functionality to manage these packets. This control functionality for packet management, according to the preferred embodiment of the invention, will now be described relative to the state diagram of Figure 8, and implemented as packet management logic within control logic and clock circuitry 47, either centrally or in a distributed fashion, in FIFO memory 40.

In general, packet management logic is provided to ensure the coherence of packets that are read from FIFO memory 40. In this regard, it is important for control logic 47 to comprehend the number of packets that are stored within FIFO memory 40, and to comprehend the start and end of these stored packets. In addition, FIFO memory 40 according to this embodiment of the invention has the capability of handling "cut through" packets, which are packets of a size greater than a configurable threshold. For packets of a size greater than this threshold, the reading out of the beginning of the packet from FIFO memory 40 is permitted prior to the writing in of the end of the packet. As such, the "cut through" packet will not have both a start and end within FIFO memory 40 at any given time.

The state diagram of Figure 8 refers to the state of sequential logic within control logic 47 of FIFO memory 40 that controls the packet management functions. This state diagram operates in connection with a set of state variables, in which SOP refers to a start-of-packet indicator in the data stream, and in which EOP refers to an end-of-packet indicator:

| State variable | Function |
|---|---|
| write_sop | if = 1, an SOP has been written |
| write_eop | if = 1, an EOP has been written |
| pass_cut_thru_Th | if = 1, a packet of size greater than a threshold value is present |
| read_sop | if = 1, an SOP has been read |
| read_eop | if = 1, an EOP has been read |
| #pkt | number of packets stored in the FIFO |
| writing_pkt | if = 1, a packet is currently being written |
| sending_pkt | if = 1, a packet is current being read |
| sop_cnt | number of SOPs stored |
| eop_cnt | number of EOPs stored |

These, and other, state variables operate in connection with control logic 47 to manage the packets being written into and read from FIFO memory 40.

Referring now to the state diagram of Figure 8, initial no_pkt state 70 is entered upon reset of FIFO memory 40. In state 70, no part of any packet is stored within FIFO memory 40. FIFO memory 40 makes a transition to first_sop state 72 upon receiving an indication that an SOP has been written into FIFO memory 40 (write_sop); the writing_pkt state variable is then set in response to this event. A transition from first_sop state 72 occurs upon the end of this first packet being written (write_eop), in response to which the writing_pkt state variable is cleared, and the #pkt state variable is incremented to the value 1, indicating that one complete packet has been written into FIFO memory 40. Control logic 47 then enters one_pkt_rdy state 74.

Control logic 47 remains in one_pkt_rdy state 74 after the start of a next packet is also being written into FIFO memory 40 (write_sop), during which time the writing_pkt state variable is set. Upon completion of the write of this next packet to FIFO memory 40 (write_eop), control logic 47 makes a transition to pkts_rdy state 75, clearing the writing_pkt state variable and incrementing the #pkt state variable to the new count (#pkt = 2). The pkts_rdy state 75 indicates that more than one packet is stored within FIFO memory 40.

On the other hand, from one_pkt_rdy state 74, if this single packet is being read (read_sop), control logic 47 makes a transition to tx_last_pkt state 76, setting the sending_pkt state variable. As evident from its name, tx_last_pkt state 76 refers to the state in which the only or last remaining packet is in the process of being read from FIFO memory 40. Upon completion of the read of this last or only packet (read_eop, in combination with the confirming condition of #pkt-1=0), control logic 47 makes a transition to pkt_brake state 80, which will be described below. On the other hand, control logic 47 remains in tx_last_pkt state 76 if the start of a new packet is being read (write_sop), setting state variable writing_pkt. If the end of this next packet is written before the last packet is read out (write_eop, in combination with the confirming condition of #pkt+1 is greater than or equal to 2), control logic 47 makes a transition to pkts_rdy state 75, incrementing state variable #pkt and clearing state variable writing_pkt.

This operation of FIFO memory 40 continues in this manner, with control logic 47 managing the possibility of zero, one, or more than one packet being stored. To handle "cut-through" packets, control logic 47 enters cut_thru state 78 from first_sop state 72, in response to state variable pass_cut_thru_Th indicating, in the true condition, that the size of the packet for which an SOP has been written (state 72) is greater than a preselected threshold size. In connection with this transition, state variable sending_pkt is set to indicate that this packet is readable from FIFO memory 40. Both of the state variables writing_pkt and sending_pkt are set in this condition, indicating that the same large packet is both being written and being read simultaneously. In cut_thru state 78, receipt of the end of the jumbo packet (write_eop) by FIFO memory 40 causes control logic 47 to make a transition to tx_last_pkt state 76, incrementing state variable #pkt and clearing the writing_pkt state variable. The last remaining packet in FIFO memory 40 at this point is the remainder of the jumbo packet.

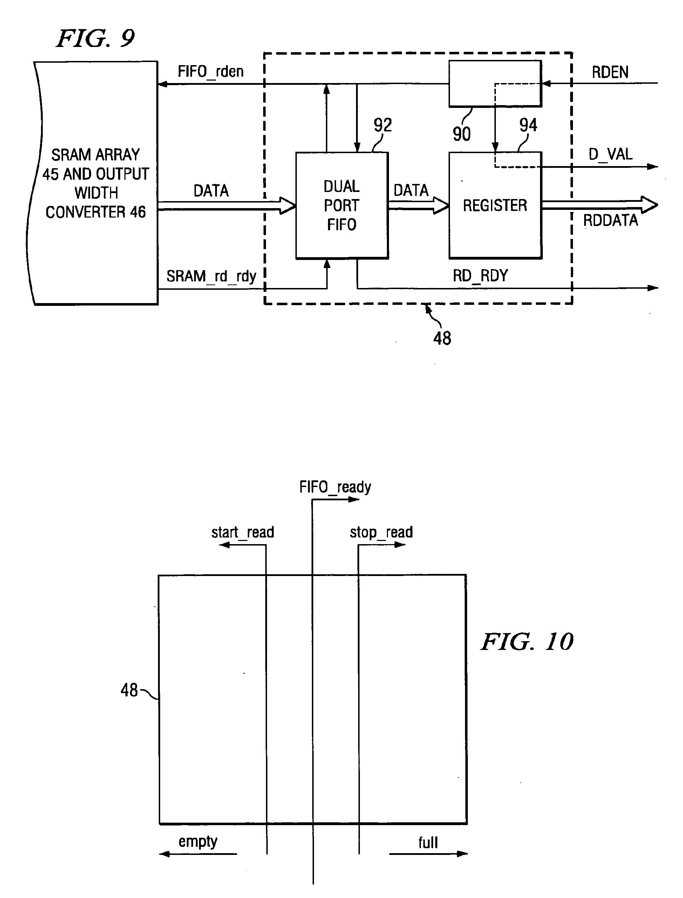

As mentioned above, the implementation of FIFO memory 40 in the network communications context described above relative to Figures 1 and 2 preferably contemplates the operation of FIFO memory 40 in a context in which reads from FIFO memory 40 can stop synchronously with the read strobe RDEN. In the architecture described above, this is made somewhat difficult because reads of SRAM array 45 internally to FIFO memory 40 are scheduled reads, rather than strobed or asynchronous reads. According to this preferred embodiment of the invention, the need to synchronously stop reading data from SRAM array 45 can arise in two situations. In a first situation, reads from SRAM array 45 should preferably stop after the output of an EOP externally from FIFO memory 40 if the next frame of data is not ready (i.e., because it is neither fully stored within SRAM array 45 nor corresponds to a "cut through" frame), in order to avoid the underflow condition in which all available data is read out of FIFO memory 40 before SRAM array 45 receives the EOP for the next packet. A second such situation arises when the external downstream destination deasserts the read enable signal, either at the end of a packet or in mid-packet. According to the preferred embodiment of the invention, output FIFO 48 is provided to effect a "read brake" function in these two situations, as will now be described relative to Figure 9.

The construction of output FIFO 48 according to this embodiment of the invention is illustrated in Figure 9. As shown in Figure 9, output FIFO 48 includes dual port FIFO 92, output register 94, and strobe buffer 90 (which corresponds to read request buffer 44 of Figure 5). Strobe buffer 90 receives the read strobe on external read enable line RDEN from the data destination, and buffers this read strobe into a signal applied to dual port FIFO 92. Dual port FIFO 92 is a conventional small FIFO memory, preferably configured with dual port memory cells; typically, however, dual port FIFO 92 is much smaller than SRAM array 45, and need only be of sufficient size to retain a few data words. Register 92 temporarily stores a data word after being output by dual port FIFO 92 and prior to being applied on output data lines RDDATA, to achieve synchronization.

As mentioned above, the downstream external destination of data from FIFO memory 40 asserts and deasserts a read strobe signal on read enable line RDEN to request and stop data access, respectively. According to this embodiment of the invention, and as mentioned above, one function of output FIFO 48 is to effect an immediate stop of output data upon read enable line RDEN going inactive. Referring to Figure 9, this is accomplished by strobe buffer 90 sensing the inactive state on read enable line RDEN, and immediately disabling output from register 94 in response; strobe buffer 90 also deasserts the valid data signal on line D_VAL, indicating that the data on lines RDDATA are no longer valid.

Also in this case, strobe buffer 90 forwards a signal to dual port FIFO 92 in response to the deasserted read strobe on read enable line RDEN. Dual port FIFO 92 then takes line FIFO_rden to an inactive state. To the extent that reads from SRAM array 45 remain scheduled at this time, those scheduled reads continue to be executed, with the results stored in dual-port FIFO 92. In this way, the cessation of external read requests, or read strobes, results in the immediate cessation of output data externally from FIFO memory 40, while permitting the remaining scheduled reads of SRAM array 45 to take place.

Another situation in which the "read brake" function is useful occurs upon the sending out, or reading, of the end of the last full packet stored in FIFO memory 40. This amounts to a possible underflow condition at FIFO memory 40. Referring back to Figure 5, SRAM array 45 deasserts the control signal on line SRAM_rd_rdy upon its outputting of the EOP indicator for its last or only packet. This signal is received by the downstream destination device, by way of the RD_RDY control line, in response to which this downstream external device stops sending read strobes on read enable line RDEN. However, because this involves a number of clock cycles to fully stop the read operation, FIFO memory 40 includes the "read brake" function so that it can stop its operation at the desired point in time or state. If this were not the case, the start of the next packet could be undesirably read out, before the packet is ready for output, thus causing a loss of a packet.

Referring back to Figure 9 in combination with Figure 8, the reading of the EOP for the last packet to be transmitted (from tx_last_pkt state 76) is indicated by state variable read_eop, in combination with the value of state variable #pkt being one (i.e., #pkt-1 = 0), and further in combination with state variable sop_cnt also equal to one, meaning that the start of another packet is already in memory. In this event, control logic 47 makes a transition to read_brake state 80, and resets state variable sending_pkt. Control logic 47 remains in read_brake state 80, even if a read of the SOP for the next packet is later requested (in which case state variable sending_pkt is set). Upon the write of the EOP for that next packet (write_eop), and if the packet has not been sent yet (sending_pkt is clear), control logic 47 transitions to one_pkt_rdy state 74, and increments the packet count state variable #pkt. If the new packet, for which the SOP has been written, is a jumbo packet such that its length exceeds the cut through threshold (pass_cut_thru_Th is set), control logic 47 passes to cut_thru state 78, for processing of the jumbo packet.

In addition, output FIFO 48 includes threshold logic for generating its ready signal RD_RDY to the downstream function, and also to control the flow of data from SRAM array 45 into output FIFO 48. A preferred example of the thresholds according to which this threshold logic operates is schematically illustrated in Figure 10, in which output FIFO 48 is operated according to three thresholds. If output FIFO 48 is filled beyond threshold FIFO_ready, which is near the midpoint of the capacity of output FIFO 48, the downstream data destination receives a signal indicating that FIFO memory 40 can now be read. A second threshold stop_read is higher than threshold FIFO_ready. When the filled capacity of output FIFO 48 exceeds this threshold stop_read, reads of SRAM array 45 are stopped, to avoid overflow of output FIFO 48. When the filled capacity of output FIFO 48 falls below a third threshold start_read, which is lower than threshold FIFO_ready, reads of data from SRAM array 45 into output FIFO 48 are initiated to ensure that output FIFO 48 does not underflow. This multilevel control from output FIFO 48 is especially useful in maintaining an efficient flow of data through FIFO memory 40.

According to the preferred embodiment of the invention, therefore, an extremely cost-efficient FIFO memory is provided. The inventive FIFO memory appears, to its external functions, as a dual-port memory, capable of receiving asynchronous writes and reads. However, the FIFO memory according to this invention can be realized by way of conventional single-port memory cells, thus enabling the fabrication of an extremely large FIFO memory with dual-port functionality, well beyond the size of such a dual-port FIFO that can be feasibly implemented and integrated according to modern technology.

The size of the dual-port FIFO constructed according to this invention is especially beneficial in the network communications context, particularly in high data rate networks such as 10 Gbit Ethernet. The buffer function provided by the FIFO according to this invention permits the separation of network nodes by as much as on the order of kilometers, enabling the realization of extremely high data rate networks in the Metro context while providing an efficient and simple way to accomplish lossless flow control.

In addition, the dual-port FIFO according to the preferred embodiment of the invention includes packet management functionality, so that packet communications can be readily carried out at network nodes that implement this device.

While the present invention has been described according to its preferred embodiments, it is of course contemplated that modifications of, and alternatives to, these embodiments, such modifications and alternatives obtaining the advantages and benefits of this invention, will be apparent to those of ordinary skill in the art having reference to this specification and its drawings.

In particular, features of a first-in-first-out memory are set forth in Claims 1 to 5. Further features are as follows:-

The memory circuit as set forth, wherein the sequential logic also controls the write buffer to then store a third input data word in a buffer storage location of the second column responsive to the inputs receiving the third input data word prior to an internal write cycle.

The memory circuit of as set forth, wherein the read buffer comprises:

an output width converter, for converting double-width output data words read from the memory array into a sequence of output data words; and
an output FIFO, coupled to the output width converter, for buffering the output data words in a first-in-first-out fashion.

The memory circuit as set forth, wherein the read circuitry further comprises:

an output register for presenting an output data word received from the output FIFO at the outputs, in combination with a data valid signal, responsive to the read circuitry receiving a read enable signal.

The memory circuit as set forth, wherein the output FIFO generates a read ready signal responsive to its contents storing a number of output data words exceeding a first threshold.

The memory circuit as set forth, wherein the output FIFO generates a stop read signal to the memory array responsive to its contents storing a number of output data words exceeding a second threshold that is higher than the first threshold;
and wherein the output FIFO generates a start read signal to the memory array responsive to its contents storing a number of output data words below a third threshold that is lower than the first threshold.

The memory circuit of as set forth, wherein the input data words and output data words correspond to data arranged in packets, each packet including a start-of-packet indicator and an end-of-packet indicator;
and further comprising:

packet management logic, for controlling the operation of the memory circuit, the packet management logic for enabling the outputting of output data words corresponding to a packet, responsive to detecting the writing of a start-of-packet indicator and an end-of-packet indicator.

The memory circuit as set forth, wherein the packet management logic is also for enabling the outputting of output data words corresponding to a jumbo packet, responsive to detecting the writing of a start-of-packet indicator and to a packet size indicator indicating that the packet has a length greater than a threshold.

The memory circuit as set forth, wherein the packet management logic is also for maintaining a count of the number of packets stored in the memory array.

The memory circuit as set forth, wherein the packet management logic is also for disabling the outputting of output data words, responsive to the outputting an end-of-packet indication for a packet and to the count indicating no additional packets are stored.

The memory circuit as set forth, wherein the read buffer comprises:

an output width converter, for converting double-width output data words read from the memory array into a sequence of output data words;

an output FIFO, coupled to the output width converter, for buffering the output data words in a first-in-first-out fashion; and

an output register for presenting an output data word received from the output FIFO at the outputs, in combination with a data valid signal, responsive to the read circuitry receiving a read enable signal.

and wherein the packet management logic controls the output register to disable the outputting of output data words responsive to the outputting an end-of-packet indication for a packet and to the count indicating no additional packets are stored.

Feature of a buffering method are set forth in Claims 6 to 10. Further features are as follows:-

The method as set forth, further comprising:

after the reading step and prior to the presenting step, buffering the first and second output data words in an output FIFO buffer; and

before the presenting step, generating a read ready signal responsive to the output FIFO buffer storing a number of output data words exceeding a first threshold;

and wherein the presenting step is performed responsive to receiving a read strobe signal after the generating of the read ready signal.

The method as set forth, further comprising:

generating a stop read signal to the memory array responsive to the output FIFO buffer storing a number of output data words exceeding a second threshold that is higher than the first threshold; and

generating a start read signal to the memory array responsive to the output FIFO buffer storing a number of output data words below a third threshold that is lower than the first threshold.

**Claims**

1. A first-in-first-out memory (40), comprising:

a memory array (45) comprising an array of single port memory cells ;
a clock terminal (47) arranged to receive clock signal (CLK);
a write enable terminal arranged to receive a write enable signal (WREN);
inputs arranged to receive input data words (WRDATA);
a read enable terminal arranged to receive a read enable signal (RDEN);
outputs arranged to present output data words (RDDATA) of the same word width as that of the input data words;
a write buffer (42), coupled to the inputs and to the array of memory cells, arranged to receive a sequence of first and second input data words from the inputs in response to write enable signals (WREN) at the write enable terminal, and
a read buffer (44, 46), arranged to receive the first and second output data words from the memory array (45) in response to a request of a read of the memory array and to present the first and second output data words in sequence to the outputs,

**characterized in that**

the memory array (45) is of double-word width, the write buffer (42) is further arranged to perform a first 5 width conversion of the first and second input data words and to write the first and second input data words to the memory array (45) in a single write cycle;

the memory comprises read circuitry arranged to request a read of the memory array (45) responsive to receiving first and second read enable signals (RDEN) at the read enable terminal;

and the read buffer (44,46) is further arranged to receive the first and second output data words from the memory array (45) in a single read cycle and to perform a second width conversion of said first and second output data words.

2. The memory circuit of claim 1, wherein the write buffer (42) comprises:

a plurality of buffer storage locations; and
sequential logic (47) arranged to control the write buffer (42) to store input data words received from the inputs in selected ones of the buffer storage locations, and to control the write buffer (42) to forward pairs of stored input data words to the memory array (45).

3. The memory circuit of claim 2, wherein the plurality of buffer storage locations are arranged in rows and columns, including first and second columns (a, b) of buffer storage locations having storage locations in first and second rows (0, 1).

4. The memory circuit of claim 3, wherein the sequential logic controls the write buffer (42) to store a first input data word in a buffer storage location at the first row and the first column (a0), and to store a second input data word in a buffer storage location at the second row and the first column ($\alpha$1);
and wherein the sequential logic (47) also controls the write buffer (42) to then forward the first and second input data words to the memory array (45) in an internal write cycle.

5. The memory circuit of claim 4, further comprising:

   a clock input arranged to receive a periodic clock signal; and
   clock circuitry (47) arranged to assign alternating cycles of the periodic clock signal as internal write and internal read cycles.

6. A method of buffering data words with a memory circuit, the memory circuit including a memory array of double-word width (45) comprising an array of single port memory cells comprising the steps of:

   receiving a sequence of input data words at input terminals of the memory circuit (40);
   responsive to receiving a first input data word and a second input data word, performing a first width conversion of the first and second data words and writing the first and second input data words into the memory array (45) of the memory circuit (40) in a single write cycle;
   receiving read strobe signals (RDEN);
   responsive to receiving first and second read strobe signals, reading first and second output data words from the memory array (45) in a single read cycle, performing a second width conversion of said first and second output data words and sequentially presenting the first and second output data words at output terminals of the memory circuit, the first and second output data words being of the same word width as that of the input data words.

7. The method of claim 6, further comprising:

   receiving a periodic system clock signal (CLK); and
   assigning internal write cycles and internal read cycles to alternating ones of an internal clock corresponding to the system clock signal, each internal write and read cycle corresponding to a write to and a read from the memory array (45).

8. The method of claims 6 and 7, further comprising:

   responsive to receiving an input data word, storing the input data word in a write buffer (42) having a plurality of buffer storage locations arranged in rows and columns, each column (a, b) having first and second buffer storage locations associated with first and second rows (0, 1), respectively and input data words being registered in the first and second buffer storage locations of the first and second rows in a predetermined fixed order in each internal write cycle;

   wherein the writing step is performed in each write cycle in response to the first and second buffer storage locations of a column (a, b) of the write buffer (42) storing the first and second input data words, respectively.

9. The method of claim 8, further comprising:

   receiving a third input data word; and responsive to receiving the third input data word and the first and second buffer storage locations (a0, a1) of a first column (a) storing the first and second input data words, respectively, and prior to an internal write cycle, storing the third input data word in a buffer storage location (b0, b1) of a second column (b).

10. A method of managing the communications of data words arranged in packets, each packet of data words including a start-of-packet indicator and an end-of-packet indicator, wherein the packets of data words are buffered according to the method as claimed in any of claims 6 to 9.

11. A network node (5) for controlling the transmission and receipt of packet-based data over a communications facility, comprising:

> a system interface (22) for receiving transmit data (10) from a system and for outputting processed received signals to the system;
> a transmit FIFO buffer (24T), for buffering transmit data (10) received at the system interface (22);
> a transceiver (26, 28, 30, 32), for driving the communications facility with transmitted signals corresponding to the transmit data, and for receiving signals from the communications facility;
> a receive FIFO buffer (24R), for buffering the received signals;
> the transmit and receive FIFO buffers (24T;24R) being memories (40) as claimed in any of claims 1 to 5.

**Patentansprüche**

1. First-in-First-out-Speicher (40) mit:

> einem Speicherfeld (45) mit einem Feld aus Einzelport-Speicherzellen,
> einem Taktanschluss (47), der so beschaffen ist, dass er ein Taktsignal (CLK) empfängt,
> einem Schreibfreigabeanschluss, der so beschaffen ist, dass er ein Schreibfreigabesignal (WREN) empfängt,
> Eingängen, die so beschaffen sind, dass sie Eingabedatenwörter (WRDATA) empfangen,
> einem Lesefreigabeanschluss, der so beschaffen ist, dass er ein Lesefreigabesignal (RDEN) empfängt,
> Ausgängen, die so beschaffen sind, dass sie Ausgabedatenwörter (RDDATA) mit der gleichen Wortbreite wie die Eingabedatenwörter bereitstellen,
> einem Schreibpuffer (42), der an die Eingänge und an das Feld von Speicherzellen gekoppelt und so beschaffen ist, dass er in Reaktion auf Schreibfreigabesignale (WREN) am Schreibfreigabeanschluss eine Folge aus einem ersten und einem zweiten Eingabedatenwort von den Eingängen empfängt, und
> einem Lesepuffer (44, 46), der so beschaffen ist, dass er in Reaktion auf eine Leseanforderung des Speicherfelds das erste und zweite Ausgabedatenwort von dem Speicherfeld (45) empfängt und das erste und zweite Ausgabedatenwort nacheinander an den Ausgängen bereitstellt,

> **dadurch gekennzeichnet, dass**
> das Speicherfeld (45) eine Doppelwortbreite hat,
> der Schreibpuffer (42) ferner so beschaffen ist, dass er eine erste Breitenumwandlung des ersten und zweiten Eingabedatenworts durchführt und das erste und zweite Eingabedatenwort in einem einzigen Schreibzyklus in das Speicherfeld (45) schreibt,
> der Speicher eine Leseschaltungsanordnung aufweist, die so beschaffen ist, dass sie in Reaktion auf das Empfangen eines ersten und zweiten Lesefreigabesignals (RDEN) am Lesefreigabeanschluss einen Lesevorgang des Speicherfelds (45) anfordert,
> und der Lesepuffer (44, 46) ferner so beschaffen ist, dass er das erste und zweite Ausgabedatenwort in einem einzigen Lesezyklus von dem Speicherfeld (45) empfängt und eine zweite Breitenumwandlung des ersten und zweiten Ausgabedatenworts durchführt.

2. Speicherschaltung nach Anspruch 1, bei welcher der Schreibpuffer (42) Folgendes aufweist:

> mehrere Pufferspeicherstellen und
> sequentielle Logik (47), die so beschaffen ist, dass sie den Schreibpuffer (42) so steuert, dass er von den Eingängen empfangene Eingabedatenwörter an ausgewählten Stellen der Pufferspeicherstellen speichert, und dass sie den Schreibpuffer (42) so steuert, dass er Paare von gespeicherten Eingabedatenwörtern zum Speicherfeld (45) weiterleitet.

3. Speicherschaltung nach Anspruch 2, bei der die mehreren Pufferspeicherstellen in Reihen und Spalten angeordnet sind, die erste und zweite Spalte (a, b) von Pufferspeicherstellen mit Speicherstellen in ersten und zweiten Reihen (0, 1) umfassen.

4. Speicherschaltung nach Anspruch 3, bei der die sequentielle Logik den Schreibpuffer (42) so steuert, dass er ein erstes Eingabedatenwort an einer Pufferspeicherstelle in der ersten Reihe und ersten Spalte (a0) und ein zweites Eingabedatenwort an einer Pufferspeicherstelle in der zweiten Reihe und ersten Spalte (a1) speichert, und bei der die sequentielle Logik (47) den Schreibpuffer (42) auch so steuert, dass er dann das erste und zweite

EP 1 491 995 B1

Eingabedatenwort in einem internen Schreibzyklus zum Speicherfeld (45) weiterleitet.

5. Speicherschaltung nach Anspruch 4, die ferner Folgendes aufweist:

einen Takteingang, der so beschaffen ist, dass er ein periodisches Taktsignal empfängt, und
eine Taktschaltungsanordnung (47), die so beschaffen ist, dass sie alternierende Zyklen des periodischen Taktsignals als interne Schreib- und interne Lesezyklen zuordnet.

6. Verfahren zum Zwischenspeichern von Datenwörtern mit einer Speicherschaltung, wobei die Speicherschaltung ein Speicherfeld (45) mit Doppelwortbreite mit einem Feld aus Einzelport-Speicherzellen aufweist, wobei das Verfahren die Schritte umfasst, bei denen:

eine Folge von Eingabedatenwörtern an Eingangsanschlüssen der Speicherschaltung (40) empfangen wird,
in Reaktion auf das Empfangen eines ersten Eingabedatenworts und eines zweiten Eingabedatenworts eine erste Breitenumwandlung des ersten und zweiten Datenworts durchgeführt wird und das erste und zweite Eingabedatenwort in einem einzigen Schreibzyklus in das Speicherfeld (45) der Speicherschaltung (40) geschrieben werden,
Lese-Strobesignale (RDEN) empfangen werden,
in Reaktion auf das Empfangen eines ersten und zweiten Lese-Strobesignals ein erstes und zweites Ausgabedatenwort in einem einzigen Lesezyklus von dem Speicherfeld (45) gelesen werden, eine zweite Breitenumwandlung des ersten und zweiten Ausgabedatenworts durchgeführt wird und nacheinander das erste und zweite Ausgabedatenwort an Ausgangsanschlüssen der Speicherschaltung bereitgestellt werden, wobei das erste und zweite Ausgabedatenwort die gleiche Wortbreite haben wie die Eingabedatenwörter.

7. Verfahren nach Anspruch 6, das ferner Folgendes umfasst:

Empfangen eines periodischen Systemtaktsignals (CLK) und
Zuweisen von internen Schreibzyklen und internen Lesezyklen zu alternierenden Zyklen eines internen Takts, der dem Systemtaktsignal entspricht, wobei jeder interne Schreib- und Lesezyklus einem Schreib- und Lesevorgang in das bzw. von dem Speicherfeld (45) entspricht.

8. Verfahren nach den Ansprüchen 6 und 7, das ferner Folgendes umfasst:

in Reaktion auf das Empfangen eines Eingabedatenworts Speichern des Eingabedatenwort in einem Schreibpuffer (42) mit mehreren Pufferspeicherstellen, die in Reihen und Spalten angeordnet sind, wobei jede Spalte (a, b) eine erste und eine zweite Pufferspeicherstelle aufweist, die einer ersten bzw. zweiten Reihe (0, 1) zugeordnet sind, und wobei Eingabedatenwörter bei jedem internen Schreibzyklus in einer vorbestimmten, feststehenden Reihenfolge an der ersten und zweiten Pufferspeicherstelle der ersten und zweiten Reihe registriert werden,
bei dem der Schritt des Schreibens in jedem Schreibzyklus in Reaktion auf das Speichern des ersten und zweiten Eingabedatenworts an der ersten bzw. zweiten Pufferspeicherstelle einer Spalte (a, b) des Schreibpuffers (42) durchgeführt wird.

9. Verfahren nach Anspruch 8, das ferner Folgendes umfasst:

Empfangen eines dritten Eingabedatenworts und
Speichern des dritten Eingabedatenworts an einer Pufferspeicherstelle (b0, b1) einer zweiten Spalte (b) in Reaktion auf das Empfangen des dritten Eingabedatenworts und das Speichern des ersten und zweiten Eingabedatenworts an der ersten bzw. zweiten Pufferspeicherstelle (a0, a1) einer ersten Spalte (a) und vor einem internen Schreibzyklus.

10. Verfahren zum Verwalten der Kommunikation von in Paketen angeordneten Datenwörtern, wobei jedes Paket von Datenwörtern einen Paketbeginn-Indikator und einen Paketende-Indikator aufweist, wobei die Pakete von Datenwörtern gemäß dem Verfahren, wie in einem der Ansprüche 6 bis 9 beansprucht ist, zwischengespeichert werden.

11. Netzwerkknoten (5), um das Senden und Empfangen von Daten auf Paketbasis über eine Kommunikationseinrichtung zu steuern, mit

einer Systemschnittstelle (22) zum Empfangen von Sendedaten (10) von einem System und zum Ausgeben verarbeiteter empfangener Signale an das System,
einem Sende-FIFO-Puffer (24T) zum Zwischenspeichern von Sendedaten (10), die an der Systemschnittstelle (22) empfangen werden,
einem Sender/Empfänger (26, 28, 30, 32) zum Ansteuern der Kommunikationseinrichtung mit gesendeten Signalen, die den Sendedaten entsprechen, und zum Empfangen von Signalen von der Kommunikationseinrichtung,
einem Empfangs-FIFO-Puffer (24R) zum Zwischenspeichern der empfangenen Signale,

wobei der Sende- und der Empfangs-Puffer (24T, 24R) Speicher (40) sind, wie sie nach einem der Ansprüche 1 bis 5 beansprucht sind.

## Revendications

1. Mémoire du type premier entré, premier sorti (40), comprenant :

   une matrice mémoire (45) qui comprend un réseau de cellules mémoires à un seul port ;
   une borne d'horloge (47) agencée de manière à recevoir un signal d'horloge (CLK) ;
   une borne de validation d'écriture agencée de manière à recevoir un signal de validation d'écriture (WREN) ;
   des entrées agencées de manière à recevoir des mots de données d'entrée (WRDATA) ;
   une borne de validation de lecture agencée de manière à recevoir un signal de validation de lecture (RDEN) ;
   des sorties agencées de manière à présenter des mots de données de sortie (RDDATA) qui ont la même largeur de mot que celle des mots de données d' entrée ;
   un tampon d'écriture (42), couplé aux entrées et au réseau de cellules mémoires, agencé de manière à recevoir une suite de premiers et deuxièmes mots de données d'entrée en provenance des entrées en réponse à des signaux de validation d'écriture (WREN) au niveau de la borne de validation d'écriture ; et
   un tampon de lecture (44, 46), agencé de manière à recevoir les premiers et deuxièmes mots de données de sortie en provenance de la matrice mémoire (45) en réponse à une demande de lecture de la matrice mémoire, et à présenter les premiers et deuxièmes mots de données de sortie à la suite vers les sorties,

   **caractérisée en ce que** :

   la matrice mémoire (45) présente une largeur de mot double ;
   le tampon d'écriture (42) est agencé en outre de manière à exécuter une première conversion de largeur des premiers et deuxièmes mots de données d'entrée et à écrire les premiers et deuxièmes mots de données d'entrée dans la matrice mémoire (45) au cours d'un seul cycle d'écriture ;
   la mémoire comprend des circuits de lecture agencés de manière à demander une lecture de la matrice mémoire (45) en réponse à la réception des premiers et deuxièmes signaux de validation de lecture (RDEN) au niveau de la borne de validation de lecture ; et
   le tampon de lecture (44, 46) est agencé en outre de manière à recevoir les premiers et deuxièmes mots de données de sortie en provenance de la matrice mémoire (45) au cours d'un seul cycle de lecture et à exécuter une deuxième conversion de largeur desdits premiers et deuxièmes mots de données de sortie.

2. Circuit mémoire selon la revendication 1, dans lequel le tampon d'écriture (42) comprend :

   une pluralité d'emplacements de stockage tampon ; et
   une logique séquentielle (47) agencée de manière à commander le tampon d'écriture (42) afin de stocker les mots de données d'entrée reçus en provenance des entrées dans les emplacements de stockage tampon sélectionnés, et à commander le tampon d'écriture (42) afin de faire suivre les paires de mots de données d'entrée stockés vers la matrice mémoire (45).

3. Circuit de mémoire selon la revendication 2, dans lequel la pluralité d'emplacements de stockage tampon sont disposés en lignes et en colonnes, en incluant les premières et deuxièmes colonnes (a, b) des emplacements de stockage tampon ayant des emplacements de stockage dans les premières et deuxièmes lignes (0, 1).

4. Circuit de mémoire selon la revendication 3, dans lequel la logique séquentielle commande le tampon d'écriture (42) de manière à stocker un premier mot de données d'entrée dans un emplacement de stockage tampon au niveau de la première ligne et de la première colonne (a0), et à stocker un deuxième mot de données d'entrée dans un emplacement de stockage tampon au niveau de la deuxième ligne et de la première colonne (a1) ;

et dans lequel la logique séquentielle (47) commande également le tampon d'écriture (42) de manière à faire suivre ensuite les premiers et deuxièmes mots de données d'entrée vers la matrice mémoire (45) au cours d'un cycle d'écriture interne.

5. Circuit de mémoire selon la revendication 4, comprenant en outre :

une entrée d'horloge agencée de manière à recevoir un signal d'horloge périodique ; et

des circuits d'horloge (47) agencés de manière à attribuer les cycles alternants du signal d'horloge périodique en tant que cycles d'écriture internes et cycles de lecture internes.

6. Procédé de mise en tampon de mots de données avec un circuit de mémoire, le circuit de mémoire comprenant une matrice mémoire de mots de largeur double (45) qui comprend un réseau de cellules mémoires à un seul port, comprenant les étapes consistant à :

recevoir une suite de mots de données d'entrée au niveau des bornes d'entrée du circuit de mémoire (40) ;

en réponse à la réception d'un premier mot de données d'entrée et d'un deuxième mot de données d'entrée, exécuter une première conversion de largeur des premier et deuxième mots de données et écrire les premier et deuxième mots de données d'entrée dans la matrice mémoire (45) du circuit de mémoire (40) au cours d'un seul cycle d'écriture ;

recevoir des signaux d'échantillonnage de lecture (RDEN) ;

en réponse à la réception des premiers et deuxièmes signaux d'échantillonnage de lecture, lire les premiers et deuxièmes mots de données de sortie en provenance de la matrice mémoire (45) au cours d'un seul cycle de lecture, exécuter une deuxième conversion de largeur desdits premiers et deuxièmes mots de données de sortie et présenter de manière séquentielle les premiers et deuxièmes mots de données de sortie au niveau des bornes de sortie du circuit de mémoire, les premiers et deuxièmes mots de données de sortie présentant la même largeur de mot que celle des mots de données d'entrée.

7. Procédé selon la revendication 6, comprenant en outre les étapes consistant à :

recevoir un signal d'horloge système périodique (CLK) ; et

attribuer des cycles d'écriture internes et des cycles de lecture internes à ceux alternants d'une horloge interne correspondant au signal d'horloge système, chaque cycle d'écriture interne et chaque cycle de lecture interne correspondant à une écriture vers, et à une lecture en provenance de, la matrice mémoire (45).

8. Procédé selon la revendication 6 et la revendication 7, comprenant en outre les étapes consistant à :

en réponse à la réception d'un mot de données d'entrée, stocker le mot de données d'entrée dans un tampon d'écriture (42) ayant une pluralité d'emplacements de stockage tampon disposés en lignes et en colonnes, chaque colonne (a, b) ayant des premiers et deuxièmes emplacements de stockage tampon associés à des premières et deuxièmes lignes (0, 1), respectivement, les mots de données d'entrée étant stockés dans les premiers et deuxièmes emplacements de stockage tampon des premières et deuxièmes lignes dans un ordre fixé prédéterminé au cours de chaque cycle d'écriture interne ;

dans lequel l'étape d'écriture est exécutée au cours de chaque cycle d'écriture en réponse aux premiers et deuxièmes emplacements de stockage tampon d'une colonne (a, b) du tampon d'écriture (42) qui stockent les premiers et deuxièmes mots de données d'entrée, respectivement.

9. Procédé selon la revendication 8, comprenant en outre les étapes consistant à :

recevoir un troisième mot de données d'entrée ; et

en réponse à la réception du troisième mot de données d'entrée et au stockage par les premiers et deuxièmes emplacements de stockage tampon (a0, a1) d'une première colonne (a) des premiers et deuxièmes mots de données d'entrée, respectivement, et avant un cycle d'écriture interne, stocker le troisième mot de données d'entrée dans un emplacement de stockage tampon (b0, b1) d'une deuxième colonne (b).

10. Procédé de gestion de communications de mots de données agencés en paquets, chaque paquet de mots de données comprenant un indicateur de début de paquet et un indicateur de fin de paquet, dans lequel les paquets de mots de données sont tamponnés selon le procédé selon l'une quelconque des revendications 6 à 9.

11. Noeud de réseau (5) destiné à commander l'émission et la réception de données basées sur des paquets sur une voie de communications, comprenant :

une interface système (22) destinée à recevoir les données d'émission (10) en provenance d'un système et à délivrer en sortie les signaux reçus traités au système ;
un tampon FIFO d'émission (24T), destiné à mettre en tampon les données d'émission (10) reçues au niveau de l'interface système (22) ;
un émetteur récepteur (26, 28, 30, 32), destiné à piloter la voie de communications avec les signaux émis correspondant aux données d'émission, et à recevoir les signaux en provenance de la voie de communications ;
un tampon FIFO de réception (24R), destiné à mettre en tampon les signaux reçus ;
les tampons FIFO d'émission et de réception (24T ; 24R) étant des mémoires (40) selon l'une quelconque des revendications 1 à 5.

EP 1 491 995 B1

*FIG. 1A*

*FIG. 1B*

FIG. 2

FIG. 3

EP 1 491 995 B1

FIG. 4A

CLOCK

WREN

WRDATA    WR1    WR2    WR3    WR4

wcyc1    wcyc2    wcyc3    wcyc4

RDEN

RDDATA    RD1    RD2    RD3    RD4    RD5

FIG. 4B

CLOCK

WREN

WRDATA    WR1    WR2    WR3    WR4

RDEN

RDDATA    RD1    RD2    RD3    RD4    RD5

FIG. 5

FIG. 6

FIG. 7

RESET

70

read_eop&(#pkt-1=0)&
(sop_cnt=0)/sending_pkt=0

no_pkt

*FIG. 8*

write_sop/writing_pkt=1

72

first_sop

pass_cut_thru_Th/sending_pkt=1

write_eop&
(sending_pkt=0)
/#pkt++

74

write_eop/{writing_pkt=0; #pkt++}

one_pkt_rdy

write_eop/
{writing_pkt=0;
#pkt++}

read_sop/
sending_pkt=1

write_sop/
writing_pkt=1

76

75

78

tx_last_pkt

write_eop&(#pkt+1>=2)/
{writing_pkt=0; #pkt++}

pkts_rdy

cut_thru

write_sop/
writing_pkt=1

write_sop or write_eop OR
(read_eop&(#pkt+1>=2))
OR read_sop

write_eop&
(sending_pkt=1)
/#pkt++

write_eop/{writing_pkt=0; #pkt++}

read_eop&(#pkt-1=0)&
(sop_cnt=1)/sending_pkt=0

80

pass_cut_thru_Th/sending_pkt=1

read_brake

read_sop/
sending_pkt=1

*FIG. 9*

SRAM ARRAY
45 AND OUTPUT
WIDTH
CONVERTER 46

FIFO_rden

DATA

SRAM_rd_rdy

92

DUAL
PORT
FIFO

DATA

90

94

REGISTER

RDEN

D_VAL

RDDATA

RD_RDY

48

FIFO_ready

start_read

stop_read

48

empty

full

*FIG. 10*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5546347 A